# EUROPEAN PATENT APPLICATION

(11) **EP 4 848 263 A1**
(43) Date of publication of application: **02.12.2026**
(21) Application number: 26180982.6
(22) Date of filing: 26.05.2026
(51) Int. Cl.: G09G 3/00, G09G 3/20, G09G 3/36, H04N 9/31, G09G 3/34

(54) **PROJECTION DISPLAY APPARATUS**

(30) Priority: 29.05.2025 JP 2025089586
(71) Applicant: Seiko Epson Corporation, Tokyo 160-8801 (JP)
(72) Inventor: MIZUSAKO, Kazuhisa, Suwa-shi, 392-8502 (JP); OSACHI, Yuki, Suwa-shi, 392-8502 (JP); GOSHIMA, Sayaka, Suwa-shi, 392-8502 (JP)
(74) Representative: Lewis Silkin LLP

(57) **Abstract**

A display apparatus includes a lamp unit, liquid crystal panels having panel pixels in optical states according to data signals, light emitted from the lamp unit being incident on the panel pixels, the panel pixels emitting lights according to the optical states, an optical path shifting element that shifts optical paths of the lights emitted from the panel pixels and shifts a position of a projection pixel on which the emitted lights from the panel pixels are projected, and a control circuit that controls the lamp unit, the liquid crystal panels, and the optical path shifting element, wherein the control circuit controls the lamp unit to turn off or dim the light in a shift period in which the projection pixel is shifted and controls an emission state thereof based on set brightness.

## Description

The present application is based on, and claims priority from JP Application Serial Number 2025-089586, filed May 29, 2025, the disclosure of which is hereby incorporated by reference herein in its entirety.

### BACKGROUND

### 1. Technical Field

The present disclosure relates to a projection display apparatus.

### 2. Related Art

In a projection display apparatus that projects an image light created by a liquid crystal panel or the like onto a screen or the like, a technique of virtually enhancing resolution by an optical path shifting element is known. Specifically, in the projection display apparatus, a single frame period is divided into a plurality of unit periods, the projection position of one panel pixel in the liquid crystal panel is shifted for each unit period, and gradation levels designated by pixel data of video pixels constituting video data are individually represented in each unit period (for example, see JP-A-2021-139968).

JP-A-2021-139968 is an example of the related art.

However, in the technique described above, for example, when the projection image is darkened according to the use environment, there is a problem that the display quality is deteriorated.

### SUMMARY

A projection display apparatus according to an aspect of the present disclosure includes a light source that emits light, a liquid crystal panel having a panel pixel to be an optical state according to a data signal, the light emitted from the light source being incident on the panel pixel, the panel pixel emitting light according to the optical state, an optical path shifting element that shifts an optical path of the light emitted from the panel pixel and shifts a position of a projection pixel on which the emitted light from the panel pixel is projected, and a control circuit that controls the light source, the liquid crystal panel, and the optical path shifting element, wherein a single frame period includes k unit periods of a first unit period to a k-th unit period, k being an integer of 2 or more, the control circuit supplies the data signal based on a gradation level designated by pixel data of a video pixel constituting video data for each of the unit periods, the control circuit controls the optical path shifting element to shift the projection pixel for each of the unit periods, and the control circuit controls the light source to turn off or dim the light in a shift period in which the projection pixel is shifted and controls an emission state thereof based on a value of brightness.

### BRIEF DESCRIPTION OF THE DRAWINGS

FIG. 1 shows a projection display apparatus according to a first embodiment.
FIG. 2 is a block diagram showing a configuration of the projection display apparatus.
FIG. 3 is a block diagram showing a configuration of a liquid crystal panel in the projection display apparatus.
FIG. 4 shows a pixel circuit in the liquid crystal panel.
FIG. 5 shows a relationship between a single frame period and unit periods in the projection display apparatus.
FIG. 6 shows a relationship between an arrangement of video pixels and an arrangement of panel pixels in the projection display apparatus.
FIG. 7 shows a transition of video pixels represented by a panel pixel in unit periods.
FIG. 8 shows a relationship among writing to the liquid crystal panel, a projection position, and control of a lamp unit.
FIG. 9 shows a relationship among writing, a projection position, and control of a lamp unit in a modification of the first embodiment.
FIG. 10 shows a relationship among writing, a projection position, and control of a lamp unit in a second embodiment.
FIG. 11 shows a relationship among writing, a projection position, and control of a lamp unit in a third embodiment.
FIG. 12 shows another transition of video pixels represented by the panel pixel in the unit periods.

### DESCRIPTION OF EMBODIMENTS

A projection display apparatus according to an embodiment will hereinafter be described with reference to the drawings. Note that, in the drawings, dimensions and scales of the respective parts are appropriately made different from real ones. The following embodiments are preferable specific examples of the present disclosure and therefore various technically preferable limitations are imposed thereon, however, the scope of the present disclosure is not limited to the embodiments unless there is a description that the present disclosure is limited thereto in particular in the following description.

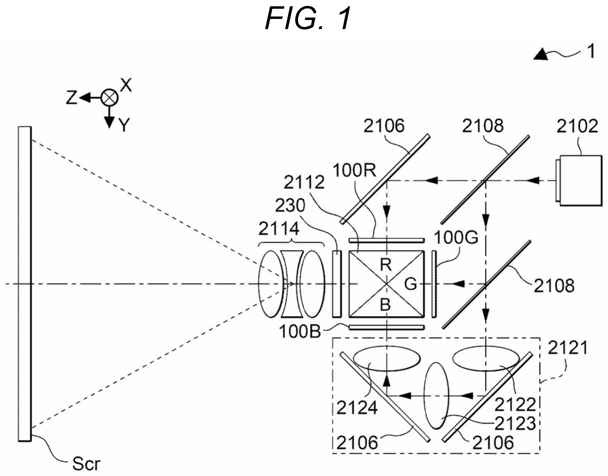

FIG. 1 shows an optical configuration of a projection display apparatus 1 according to a first embodiment. As shown in the drawing, the projection display apparatus 1 includes liquid crystal panels 100R, 100G, and 100B. Inside the projection display apparatus 1, a lamp unit 2102, three mirrors 2106, and two dichroic mirrors 2108 are provided.

The lamp unit 2102 emits white light by an LED, a laser, or the like.

The white light emitted from the lamp unit 2102 is separated into three primary colors of red (R), green (G), and blue (B) by the two dichroic mirrors 2108.

Among these, an R light is incident on the liquid crystal panel 100R, a G light is incident on the liquid crystal panel 100G, and a B light is incident on the liquid crystal panel 100B, respectively.

Note that, since the B optical path is longer than the R optical path and the G optical path, it is necessary to prevent loss in the B optical path. Therefore, a relay lens system 2121 including an incident lens 2122, a relay lens 2123, and an exit lens 2124 is provided in the B optical path.

The liquid crystal panel 100R includes a plurality of pixel circuits as described later. Each of the plurality of pixel circuits includes a liquid crystal element. The liquid crystal element of the liquid crystal panel 100R is driven based on the data signal corresponding to R, thereby setting transmittance which is an optical state corresponding to the voltage of the data signal.

Accordingly, by individually controlling the transmittance of the liquid crystal element based on the data signal corresponding to R, the liquid crystal panel 100R generates an R transmission image. Similarly, the liquid crystal panel 100G generates a G transmission image based on the data signal corresponding to G, and the liquid crystal panel 100B generates a B transmission image based on the data signal corresponding to B.

The transmission images of the respective colors respectively generated by the liquid crystal panels 100R, 100G, and 100B are incident on a dichroic prism 2112 from three directions. In the dichroic prism 2112, the R light and the B light are refracted by 90 degrees, while the G light travels straight. Accordingly, the dichroic prism 2112 combines the images of the respective colors. The combined image by the dichroic prism 2112 enters a projection lens 2114 via an optical path shifting element 230.

The projection lens 2114 enlarges and projects the combined image via the optical path shifting element 230 onto a screen Scr.

The optical path shifting element 230 shifts the optical path of the combined image emitted from the dichroic prism 2112. The optical path shifting element 230 can arbitrarily shift the combined image projected on the screen Scr in the two-dimensional direction of the projection surface.

In the present embodiment, the details of the optical path shifted by the optical path shifting element 230 will be described later.

The transmission images by the liquid crystal panels 100R, 100B are reflected by the dichroic prism 2112 and projected, while the transmission image by the liquid crystal panel 100G travels straight and is projected. Therefore, the transmission images by the liquid crystal panels 100R, 100B have a horizontally-flipped relationship with respect to the transmission image of the liquid crystal panel 100G.

For convenience of description, when the projection surface of the screen Scr is viewed from the projection display apparatus 1, the leftward and rightward directions are along an X axis, and the upward and downward directions are along a Y axis. Of the leftward and rightward directions along the X axis, the rightward direction is referred to as an X direction, and the leftward direction is referred to as an opposite direction to the X direction. In the upward and downward directions along the Y axis, the downward direction is referred to as a Y direction, and the upward direction is referred to as an opposite direction to the Y direction. The projection direction of the projection display apparatus 1 is referred to as a Z direction.

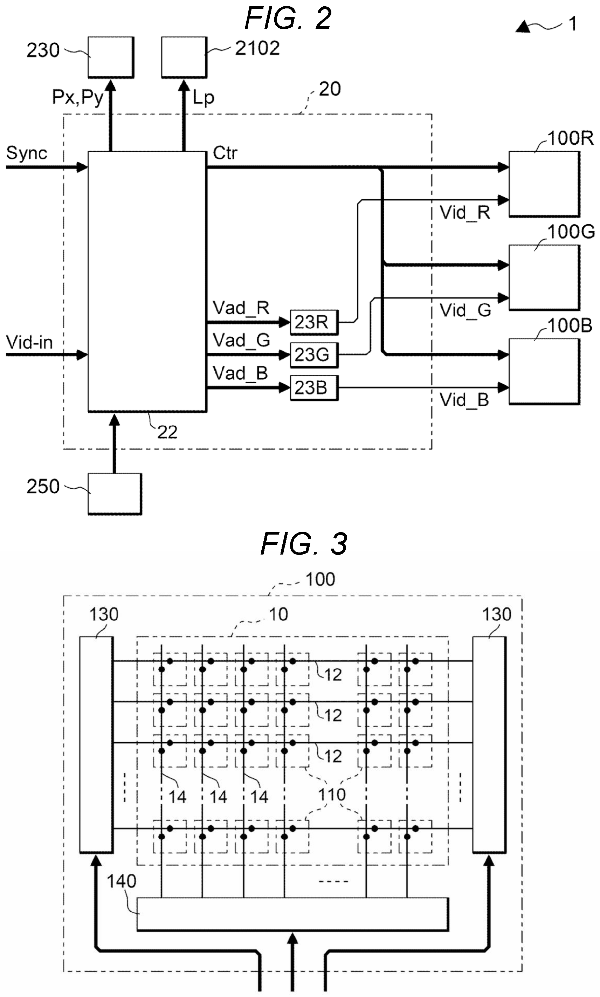

FIG. 2 is a block diagram showing an electrical configuration of the projection display apparatus 1. As illustrated in the drawing, the projection display apparatus 1 includes a display control circuit 20, the liquid crystal panels 100R, 100G, and 100B, the optical path shifting element 230, and a setting unit 250.

Video data Vid-in is supplied from a higher-level device (not illustrated) such as a host device in synchronization with a synchronization signal Sync. The video data Vid-in includes pixel data of video pixels, and the pixel data designates the gradation levels of the video pixels by, for example, 8 bits for each of RGB.

Note that the video pixels and the pixel data may be described without particular distinction. Furthermore, pixels of an image before combination or after combination by the liquid crystal panel 100R, 100G, or 100B are referred to as panel pixels. The panel pixel shifted by the optical path shifting element 230 and projected on the screen Scr is referred to as a projection pixel, and a position where the projection pixel is projected is referred to as a projection position.

In the liquid crystal panels 100R, 100G, and 100B, panel pixels are arranged in a matrix in plan view. In the embodiment, the arrangement of the video pixels designated by the video data Vid-in is, for example, twice in the longitudinal direction and twice in the lateral direction as compared with the arrangement of the panel pixels by the liquid crystal panel 100R, 100G, or 100B.

In the embodiment, a color image projected on the screen Scr is represented by combining the transmission images of the liquid crystal panels 100R, 100G, and 100B. Therefore, the minimum unit of the color image can be divided into a red subpixel by the liquid crystal panel 100R, a green subpixel by the liquid crystal panel 100G, and a blue subpixel by the liquid crystal panel 100B. However, when it is not necessary to specify the colors or when only lightness and darkness matter regarding the sub-pixels in the liquid crystal panels 100R, 100G, and 100B, the expression as subpixels is not necessary. In this description, the display units in the liquid crystal panels 100R, 100G, and 100B are also referred to as panel pixels.

The synchronization signal Sync includes a vertical synchronization signal for instructing to start vertical scanning of the video data Vid-in, a horizontal synchronization signal for instructing to start horizontal scanning, and a clock signal indicating a timing of one video pixel in the video data Vid-in.

The display control circuit 20 includes a processing circuit 22 and conversion circuits 23R, 23G, and 23B.

The processing circuit 22 controls the conversion circuits 23R, 23G, and 23B, the liquid crystal panels 100R, 100G, and 100B, the optical path shifting element 230, and the lamp unit 2102 for each of unit periods f-1 to f-4 described later based on the synchronization signal Sync. The optical path shifting element 230 shifts the projection position according to control signals P_x and P_y supplied from the processing circuit 22. The lamp unit 2102 controls the luminance of the white light emitted according to a control signal Lp supplied from the processing circuit 22.

The setting unit 250 sets the brightness of the projection image by the projection display apparatus 1, specifically, the brightness per unit time (for example, a single frame period described later) in a range from 0 to 100% by an operation of a user. Note that the setting unit 250 may be configured to detect the brightness of the surrounding environment in which the projection display apparatus 1 is installed, and set the brightness of the projection image according to the detected brightness. Furthermore, the setting unit 250 may be configured to analyze the gradation level designated by the pixel data of the video data Vid-in and set the brightness of the projection image according to the analysis result.

In the video data Vid-in supplied from the higher-level device, an R component is referred to as video data Vad_R, a G component is referred to as video data Vad_G, and a B component is referred to as video data Vad_B.

The conversion circuit 23R temporarily accumulates the video data Vad_R supplied from the higher-level device for one or two or more frame periods in an internal buffer, then reads video data corresponding to a unit period, converts the video data into a data signal Vid_R of an analog voltage, and supplies the data signal to the liquid crystal panel 100R.

The conversion circuits 23G and 23B are different from the conversion circuit 23R only in the color component of the video data to be converted, and the rest is common to the conversion circuit 23R. That is, the conversion circuit 23G converts the video data corresponding to the unit period into a data signal Vid_G of the analog voltage and supplies the data signal to the liquid crystal panel 100G regarding the video data Vad_G, and the conversion circuit 23B converts the video data corresponding to the unit period into a data signal Vid_B of the analog voltage and supplies the data signal to the liquid crystal panel 100B regarding the video data Vad_B.

Next, the liquid crystal panels 100R, 100G, and 100B will be described. The liquid crystal panels 100R, 100G, and 100B differ only in the color, that is, the wavelength of the incident light, and are substantially the same in structure. Therefore, the liquid crystal panels 100R, 100G, and 100B will be generally described with a reference sign 100 without specifying the color.

FIG. 3 is a block diagram showing an electrical configuration of the liquid crystal panel 100. In the liquid crystal panel 100, scanning line drive circuit 130 and a data line drive circuit 140 are disposed on a peripheral edge of a display region 10.

In the display region 10 of the liquid crystal panel 100, pixel circuits 110 are arranged in a matrix. Specifically, in the display region 10, a plurality of scanning lines 12 are disposed so as to extend in the lateral direction in the drawing, and a plurality of data lines 14 are disposed so as to extend in the longitudinal direction and to keep electrical insulation from the scanning lines 12. Furthermore, the pixel circuits 110 are provided in a matrix so as to correspond to the intersections between the plurality of scanning lines 12 and the plurality of data lines 14.

When the number of scanning lines 12 is m and the number of data lines 14 is n, the pixel circuits 110 are arranged in a matrix of m rows and n columns in the display region 10. Each of m, n is an integer of 2 or more. In the scanning lines 12 and the pixel circuits 110, in order to distinguish the rows of the matrix, the rows may be referred to as 1st, 2nd, 3rd, ..., (m-1)-th, and m-th rows in this order from the top in the drawing in some cases. Similarly, in the data lines 14 and the pixel circuits 110, in order to distinguish the columns of the matrix, the columns may be referred to as 1st, 2nd, 3rd, ..., (n-1)-th, and n-th columns in this order from the left in the drawing in some cases.

The scanning line drive circuit 130 selects the scanning lines 12 one by one in the order of, for example, the 1st, 2nd, 3rd, ..., and m-th rows under the control of the processing circuit 22, and sets the scanning signal to the scanning line 12 thus selected to an H level. Also, the scanning line drive circuit 130 sets the scanning signal to the scanning lines 12 other than the selected scanning line 12 to an L level.

The data line drive circuit 140 latches the data signal supplied from the circuit of the corresponding color of the conversion circuit 23R, 23G, or 23B for one row, and outputs the data signal to the pixel circuit 110 located on the scanning line 12 via the data line 14 in a period in which the scanning signal to the scanning line 12 is at the H level.

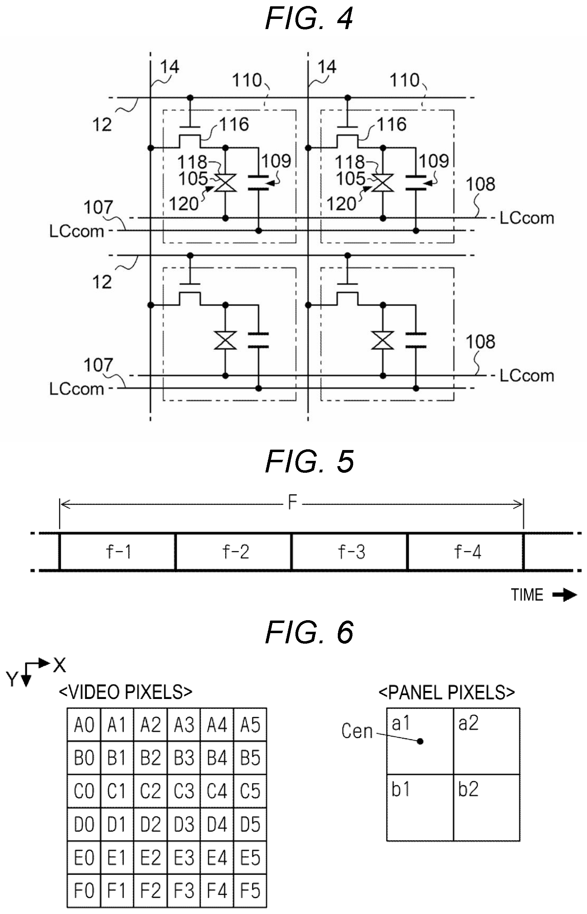

FIG. 4 shows equivalent circuits of a total of four pixel circuits 110 of two rows and two columns corresponding to the intersections between the two adjacent scanning lines 12 and the two adjacent data lines 14.

As illustrated in the drawing, the pixel circuit 110 includes a transistor 116 and a liquid crystal element 120. The transistor 116 is, for example, an n-channel thin film transistor. In the pixel circuit 110, the gate node of the transistor 116 is coupled to the scanning line 12, the source node thereof is coupled to the data line 14, and the drain node thereof is coupled to a pixel electrode 118 having a square planar shape in plan view.

A common electrode 108 is disposed common to all the pixels so as to face the pixel electrodes 118. A voltage LCcom is applied to the common electrode 108. Furthermore, as described above, liquid crystal 105 is sandwiched between the pixel electrode 118 and the common electrode 108. Therefore, the liquid crystal element 120 in which the liquid crystal 105 is sandwiched between the pixel electrode 118 and the common electrode 108 is configured for each pixel circuit 110.

In addition, a storage capacitor 109 is provided in parallel with the liquid crystal element 120. In the storage capacitor 109, one end is coupled to the pixel electrode 118, and the other end is coupled to a capacitance line 107. A temporally constant voltage, for example, the same voltage LCcom as the voltage applied to the common electrode 108 is applied to the capacitance line 107. Since the pixel circuits 110 are arranged in a matrix in the lateral direction which is the extension direction of the scanning lines 12 and the longitudinal direction which is the extension direction of the data lines 14, the pixel electrodes 118 contained in the pixel circuits 110 are also arranged in the row direction and the column direction.

In the scanning line 12 in which the scanning signal is at the H level, the transistor 116 of the pixel circuit 110 provided to correspond to the scanning line 12 is in an on-state. Since the data line 14 and the pixel electrode 118 are electrically coupled to each other due to the on-state of the transistor 116, the data signal supplied to the data line 14 reaches the pixel electrode 118 via the transistor 116 in the on-state. When the scanning line 12 is at the L level, the transistor 116 is in an off-state, however, the voltage of the data signal having reached the pixel electrode 118 is held by a capacitive property of the liquid crystal element 120 and the storage capacitor 109.

As is well known, in the liquid crystal element 120, alignment of liquid crystal molecules changes in accordance with an electric field generated by the pixel electrode 118 and the common electrode 108. Therefore, the liquid crystal element 120 is provided with transmittance according to the effective value of the applied voltage.

Note that a region functioning as a panel pixel in the liquid crystal element 120, that is, a region having transmittance corresponding to the effective value of the voltage is a region where the pixel electrode 118 and the common electrode 108 overlap each other in plan view. Since the pixel electrode 118 is square in plan view, the shape of the panel pixel of the liquid crystal panel 100 is also square. The plan view refers to a view from a direction perpendicular to the substrate surface of the liquid crystal panel 100 or the projection surface.

In addition, in order to efficiently transmit a large amount of light to an opening portion serving as the panel pixel, although not particularly illustrated, a microlens is provided for each panel pixel. Since the light repelled by the black matrix is sent to the opening portion by the microlens, the use efficiency of the light is enhanced, but as described later, a phenomenon occurs in which the vicinity of the center of the panel pixel becomes lighter and the brightness decreases toward the periphery.

In the present embodiment, the liquid crystal 105 is of a vertical alignment (VA) type, and is in a normally black mode in which the transmittance is the lowest when the voltage applied to the liquid crystal element 120 is zero, and the transmittance increases as the applied voltage increases.

As described above, the arrangement of the video pixels designated by the video data Vid-in is twice in the longitudinal direction and twice in the lateral direction as compared with the arrangement of the panel pixels by the liquid crystal panel 100. Therefore, in the present embodiment, one panel pixel expresses four video pixels in the single frame period while shifting the projection position by the optical path shifting element 230, thereby artificially enhancing the resolution.

FIG. 5 shows a relationship between a frame period and unit periods in the projection display apparatus 1 according to the embodiment. As shown in the drawing, in the present embodiment, a single frame period (F) is temporally divided into four unit periods. In order to distinguish the four unit periods, reference signs f-1, f-2, f-3, and f-4 are given in order of time for convenience.

The single frame period (F) is a period in which one frame of the image represented by the video data Vid-in from the higher-level device is supplied, and is 16.7 milliseconds per one cycle when the frequency of the vertical synchronization signal contained in the synchronization signal Sync is 60 Hz. In this case, the length of each unit period is 4.17 milliseconds, which is one fourth of the length of the single frame period.

FIG. 6 shows a relationship between video pixels represented by panel pixels in the unit periods f-1 to f-4. Specifically, in the drawing, the right part shows an arrangement of the panel pixels, and the left part shows an arrangement of the video pixels.

The panel pixels shown in the right part are obtained by extracting two rows and two columns from the display region 10, and the video pixels shown in the left part are video pixels represented by the panel pixels of the two rows and two columns and video pixels surrounding the video pixels. Since the size of the panel pixel is longitudinally twice and laterally twice the size of the video pixel, the two video pixels in the longitudinal and lateral directions may be considered as one panel pixel.

In order to distinguish the panel pixels, reference signs a1, a2, b1, and b2 are given. For convenience, the black circle provided for the panel pixel a1 is a center Cen of the panel pixel a1, and more specifically, the center Cen is an intersection of diagonal lines in the panel pixel a1.

Similarly, reference signs A0 to A5, B0 to B5, C0 to C5, D0 to D5, E0 to E5, and F0 to F5 are given to the video pixels.

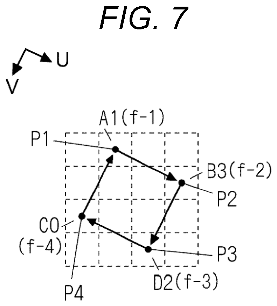

FIG. 7 shows a transition of video pixels represented by the panel pixel a1 in the unit periods f-1 to f-4. The panel pixel "representing" a certain video pixel means that the liquid crystal element 120 of the panel pixel has transmittance corresponding to a gradation level designated by the video pixel (pixel data).

In FIG. 7, broken lines in a matrix form indicate boundaries of the video pixels. The path of the projection position is indicated by a solid line, and the trajectory drawn by the center Cen of the panel pixel a1 in the single frame period (F) is indicated by a solid line.

The panel pixel a1 represents the video pixels A1, B3, D2, and C0 in order in the unit periods f-1 to f-4.

The video pixel B3 represented by the panel pixel a1 in the unit period f-2 is located at a point separated from the video pixel A1 by two video pixels in the X direction and by one video pixel in the Y direction. One video pixel in the X or Y direction corresponds to 0.5 panel pixel. Therefore, it can be rephrased that the video pixel B3 is located at a point separated from the video pixel A1 by one panel pixel in the X direction and by 0.5 panel pixel in the Y direction.

The video pixel D2 represented by the panel pixel a1 in the unit period f-3 is located at a point separated from the video pixel B3 by one video pixel in the opposite direction to the X direction and by two video pixels in the Y direction. The video pixel C0 represented by the panel pixel a1 in the unit period f-4 is located at a point separated from the video pixel D2 by two video pixels in the opposite direction to the X direction and by one video pixel in the opposite direction to the Y direction. The video pixel A1 represented by the panel pixel a1 in the unit period f-1 is located at a point separated from the video pixel C0 by one video pixel in the X direction and by two video pixels in the opposite direction to the Y direction.

In the unit periods f-1 to f-4, the panel pixel a2 represents the video pixels A3, B5, D4, and C2 in order, the panel pixel b1 represents the video pixels C1, D3, F2, and E0 in order, and the panel pixel b2 represents the video pixels C3, D5, F4, and E2 in order.

A position P1 indicates the center of the video pixel A1 represented by the panel pixel a1 in the unit period f-1. Positions P2 to P4 indicate the centers of the video pixels B3, D2, and C0 represented by the panel pixel a1 in the order of the unit periods f-2 to f-4.

A U direction is a direction from the position P1 toward the position P2, and a V direction is a direction from the position P2 toward the position P3.

The U direction and the V direction are at 26.6 degrees (= arctan(0.5)) clockwise with respect to the X direction and the Y direction. The distance along the U direction from the position P1 to the position P2 is 1.12 (= √{1² + (0.5)²}) pixels in terms of the panel pixel, which is larger than one panel pixel.

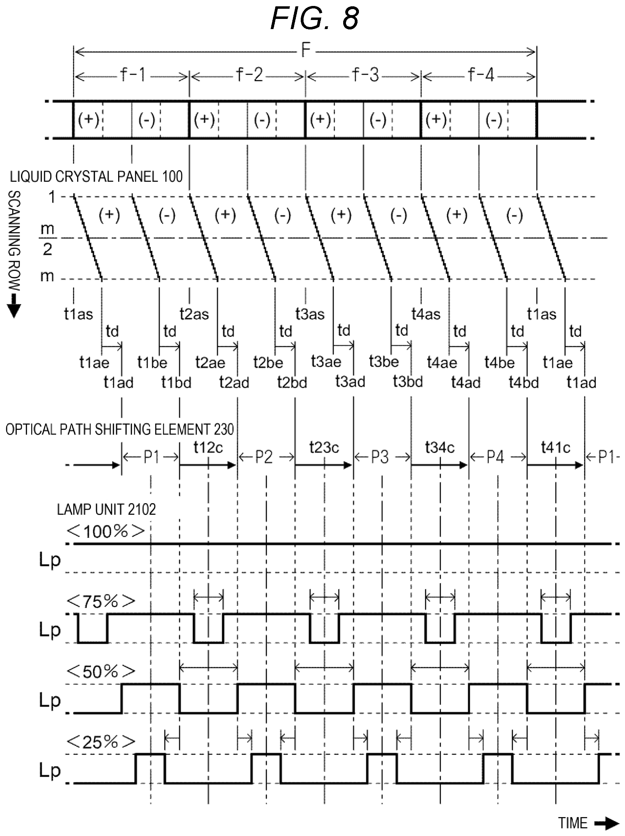

FIG. 8 shows an operation of the projection display apparatus 1. Specifically, FIG. 8 shows timings when the center Cen of the panel pixel a1 is shifted in the single frame period (F) and timings when the lamp unit 2102 is controlled and the details of the control.

As described above, the single frame period (F) is divided into the four unit periods f-1 to f-4. Furthermore, the unit periods f-1 to f-4 are each divided into a first half period and a second half period.

The first half period is a period in which a positive data signal is written to the liquid crystal panel 100, and the second half period is a period in which a negative data signal is written to the liquid crystal panel 100.

The writing period of the data signal refers to a period for applying the data signal, that is, a period for writing to the pixel electrode 118 of the liquid crystal element 120 via the data line 14. The positive data signal refers to a data signal having a voltage equal to or higher than the voltage LCcom applied to the common electrode 108, and the negative data signal refers to a data signal having a voltage equal to or lower than the voltage LCcom.

When the liquid crystal panel 100 is in the normally black mode, the transmittance of the liquid crystal element 120 increases as the difference between the voltage LCcom of the common electrode 108 and the voltage of the data signal applied to the pixel electrode 118 increases.

Although the reference voltage of the polarity is the voltage LCcom of the common electrode 108, a voltage slightly higher than the voltage LCcom may be used as a reference in consideration of feedthrough generated in the N-channel type transistor.

In the drawing, the vertical axis indicates the first row to the m-th row of the scanning lines 12 of the liquid crystal panel 100, and the temporal transition of the selected scanning line 12 is shown. When the selection of the scanning line 12 is indicated by a black short thick line, the scanning line 12 is exclusively selected row by row, and the selected scanning line 12 sequentially shifts from the first row to the m-th row as time elapses. This transition is expressed as a series of black short thick lines indicating the selection of the scanning line 12, that is, inclined lines in a diagonally downward right direction.

In the first half period of the unit period f-1, the timing at which the first scanning line 12 in the first row is selected is t1as, the timing at which the last scanning line 12 in the m-th row is selected is t1ae, and in the second half period of the unit period f-1, the timing at which the scanning line 12 in the m-th row is selected is t1be. Similarly, in the first half periods of the unit periods f-2, f-3, and f-4, the timings at which the first scanning line 12 in the first row is selected are t2as, t3as, and t4as, respectively. In the first half period and the second half period of the unit period f-2, the timings at which the scanning line 12 in the m-th row is selected are t2ae and t2be. In the first half period and the second half period of the unit period f-3, the timings at which the scanning line 12 of the m-th row is selected are t3ae and t3be. In the first half period and the second half period of the unit period f-4, the timings at which the scanning line 12 of the m-th row is selected are t4ae and t4be.

The timing t1ad is a timing delayed from the timing t1ae by time td, and the timing t1bd is a timing delayed from the timing t1be by the time td.

The time td is a delay time from when the voltage of the data signal is applied to the pixel electrode 118 to when the transmittance according to the voltage is reached in the liquid crystal element 120 of the liquid crystal panel 100. In practice, the time td is slightly different between the case where the transmittance of the liquid crystal element 120 is higher (lighter) and the case where the transmittance of the liquid crystal element 120 is lower (darker), but the time td is treated as the same in order to simplify the description.

Timings t2ad, t2bd, t3ad, t3bd, t4ad, and t4bd are sequentially delayed from the timings t2ae, t2be, t3ae, t3be, t4ae, and t4be by the time td.

In the present embodiment, of the period in which the panel pixel has the transmittance designated by the video pixels in the unit period, in the period corresponding to, for example, half of the unit period, the panel pixel stays at a position corresponding to the unit period, and after the stay, the panel pixel shifts to a position corresponding to the next unit period in the period corresponding to the rest of the unit period.

The start point of the period in which all the panel pixels in the display region 10 have the transmittance designated by the video pixels in the unit period f-1 is a timing t1ad delayed by the time td after the data signal is written to the last panel pixel in the m-th row in the first half period of the unit period f-1. The end point of the period is a timing t2as at which the data signal is written to the first panel pixel in the first row in the next unit period f-2.

When the time td is shorter than the flyback period from the timing t1bd to the timing t2as, the timing t1bd can be used as a timing at which a period corresponding to half of the unit period f-1 elapses from the timing t1ad.

Specifically, of the period in which all the panel pixels have the transmittance designated by the video pixels in the unit period f-1, in the period from the timing t1ad to the timing t1bd, the projection position is caused to stay at the position P1, and in the period from the timing t1bd to the timing t2ad, the projection position is shifted from the position P1 to the position P2.

Then, of the period in which all the panel pixels have the transmittance designated by the video pixels in the unit period f-2, in the period from the timing t2ad to the timing t2bd, the projection position is caused to stay at the position P2, and in the period from the timing t2bd to the timing t3ad, the projection position is shifted from the position P2 to the position P3.

Similarly, of the period in which all the panel pixels have the transmittance designated by the video pixels in the unit period f-3, in the period from the timing t3ad to the timing t3bd, the projection position is caused to stay at the position P3, and in the period from the timing t3bd to the timing t4ad, the projection position is shifted from the position P3 to the position P4.

Then, of the period in which all the panel pixels have the transmittance designated by the video pixels in the unit period f-4, in the period from the timing t4ad to the timing t4bd, the projection position is caused to stay at the position P4, and in the period from the timing t4bd to the timing t1ad in the next single frame period (F), the projection position is shifted from the position P4 to the position P1.

The panel pixel a1 has the transmittance designated by the video pixel A1 when the center Cen stays at the position P1 in the single frame period (F), has the transmittance designated by the video pixel B3 when the center Cen stays at the position P2, has the transmittance designated by the video pixel D2 when the center Cen stays at the position P3, and has the transmittance designated by the video pixel C0 when the center Cen stays at the position P4. Thus, according to the present embodiment, the resolution of the image visually recognized by the user can be artificially enhanced to four times.

Next, a relationship between the brightness designated by the setting unit 250 and the control of the brightness of the lamp unit 2102 will be described. The control signal Lp instructs the lamp unit 2102 to turn on at the H level, and instructs the lamp unit 2102 to turn off at the L level.

When the brightness at 100% is designated by the setting unit 250, control signal Lp is constantly maintained at the H level.

In the present embodiment, when the designated brightness is 50% or more and less than 100%, the periods at the L level in the control signal Lp with the timings t12c, t23c, t34c, and t41c at the centers are expanded as the designated brightness is reduced.

The timing t12c is a timing at the center of the period from the timing t1bd to the timing t2ad, that is, the period in which the projection position is shifted from the position P1 to the position P2. Similarly, the timing t23c is a timing at the center of the period from the timing t2bd to the timing t3ad, the timing t34c is a timing at the center of the period from the timing t3bd to the timing t4ad, and the timing t41c is a timing at the center of the period from the timing t4bd to the timing t1ad.

For example, when the designated brightness is 75%, the periods in which the control signal Lp is at the L level are set to half the shift periods of the projection position with the timings t12c, t23c, t34c, and t41c at the centers. In other words, since the shift period of the projection position is half the unit period, the period in which the control signal Lp is at the L level is the period at 25% in the unit period. In other words, the lamp unit 2102 is turned off in the period at 25% in each unit period, and the ratio of the lighting period is 75%.

For example, when the designated brightness is 50%, the periods in which the control signal Lp is at the L level are set to the entire shift periods of the projection position with the timings t12c, t23c, t34c, and t41c at the centers. Therefore, the period in which the control signal Lp is at the L level is at period at 50% in the unit period. In other words, the lamp unit 2102 is turned off in the period at 50% in each unit period, and the ratio of the lighting period is 50%, specifically, the entire period in which the projection position stays.

In the present embodiment, when the designated brightness is less than 50%, the period at the H level with the period in which the projection position stays at the center is reduced as the designated brightness decreases. For example, when the designated brightness is 25%, the period in which the control signal Lp is at the H level is set to a period at 50% of the period in which the projection position stays with the stay period at the center. In other words, since the stay period of the projection position is half the unit period, the period in which the control signal Lp is at the H level is a period at 25% in the unit period. In other words, the lamp unit 2102 is turned on in the period at 25% in each unit period.

When the designated brightness is 0%, the control signal Lp is constantly maintained at the L level, though not illustrated.

In the present embodiment, when the designated brightness is 50% or more, the period in which the control signal Lp is at the L level is adjusted in the shift period of the projection position. In the shift period of the projection position, the projection position is not a position corresponding to the video pixel, however, in the present embodiment, the turn-off of the lamp unit 2102 is expanded in the shift period, thereby reducing the period in which the projection pixel is visually recognized not at a position corresponding to the video pixel. Accordingly, deterioration of display quality can be suppressed.

When the designated brightness is less than 50%, the period in which the control signal Lp is at the H level is adjusted in the stay period of the projection position. In the stay period of the projection position, since the projection position is a position corresponding to the video pixel, the display quality is not affected.

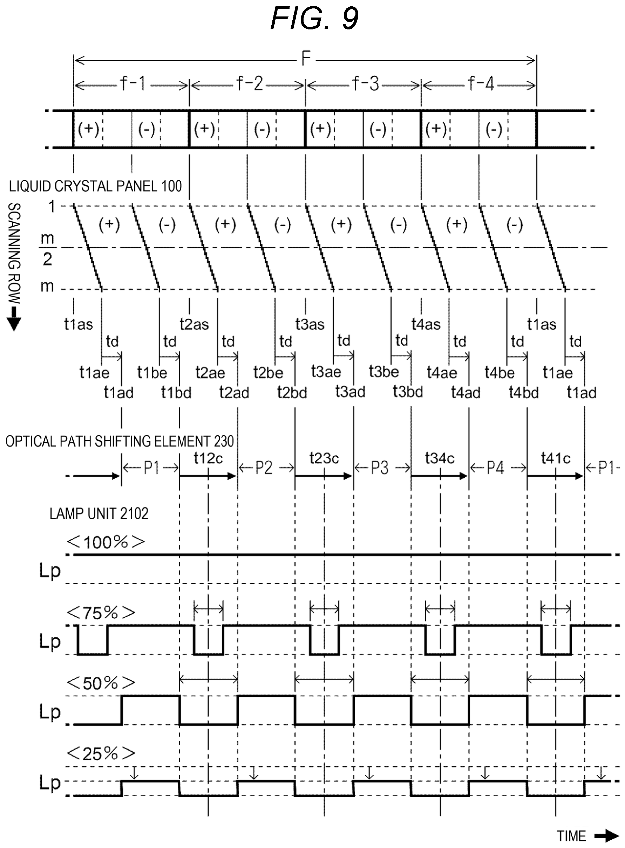

In the first embodiment, when the designated brightness is less than 50%, the period in which the control signal Lp is at the H level is adjusted, but the present disclosure is not limited thereto. For example, as in a modification of the first embodiment shown in FIG. 9, in the case described above, it is also possible to adopt a configuration in which the H level is gradually lowered, that is, a configuration in which the light is gradually dimmed, instead of the period length in which the control signal Lp is at the H level in the stay period of the projection position, in accordance with the brightness at less than 50%.

As described above, in the stay period of the projection position, since the projection position is a position corresponding to the video pixel, the display quality is not affected even in such a configuration.

Next, a projection display apparatus 1 according to a second embodiment will be described.

The second embodiment is different from the first embodiment in the control of the brightness of the lamp unit 2102 according to the brightness designated by the setting unit 250. Therefore, the second embodiment will be described with emphasis on the control of the brightness of the lamp unit 2102.

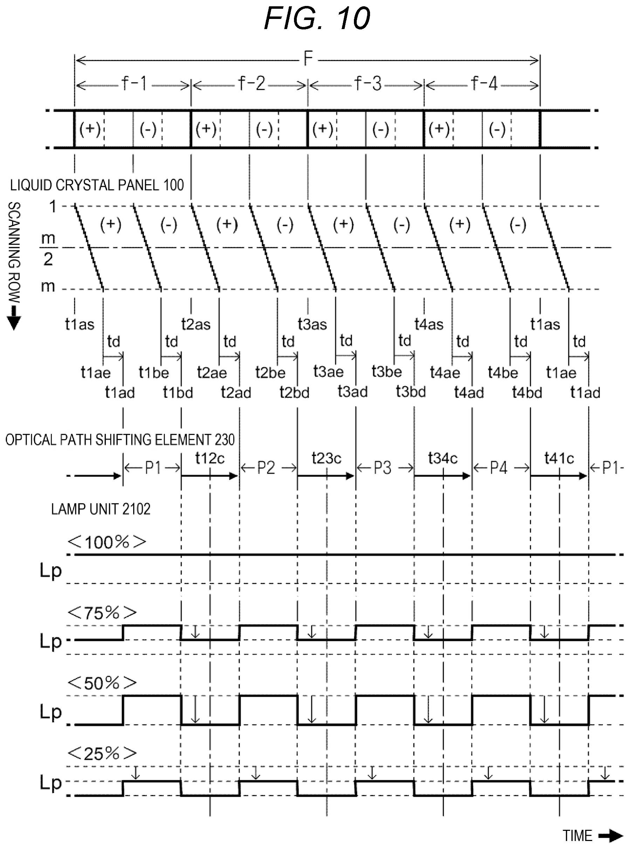

FIG. 10 shows an operation of the projection display apparatus 1 according to the second embodiment.

The second embodiment is different from the modification of the first embodiment shown in FIG. 9 in the operation when the designated brightness is 50% or more.

Specifically, in the second embodiment, when the designated brightness is 50% or more, the H level of the control signal Lp in the stay period of the projection position is gradually lowered as the brightness decreases.

In the second embodiment, when the designated brightness is less than 50%, the same control as in FIG. 9 is performed.

According to the second embodiment, similarly to the first embodiment, the resolution of the image visually recognized by the user can be artificially enhanced to four times, and the deterioration of the display quality can be suppressed.

Next, a projection display apparatus 1 according to a third embodiment will be described.

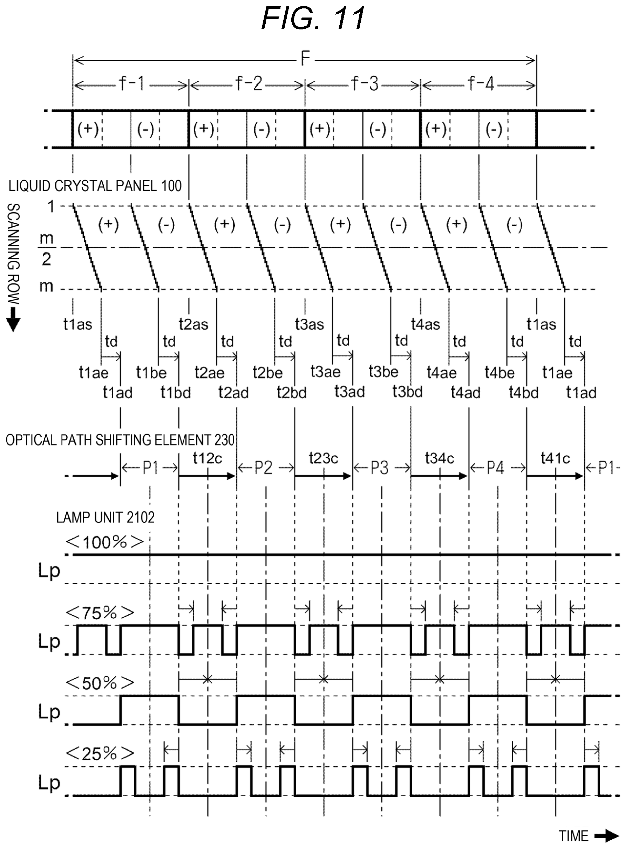

FIG. 11 shows an operation of the projection display apparatus 1 according to the third embodiment.

In the first embodiment, as illustrated in FIG. 9, when the designated brightness is less than 100% and 50% or more, the period in which the control signal Lp is at the L level is expanded as the center of the shift period as the brightness decreases, and when the designated brightness is less than 50% and 0% or more, the period in which the control signal Lp is at the H level is reduced as the center of the stay period as the brightness decreases.

In contrast, in the third embodiment, as illustrated in FIG. 11, when the designated brightness is less than 100% and 50% or more, the period in which the control signal Lp is at the L level is expanded closer to the start timing and the end timing of the shift period as the designated brightness decreases. That is, the period in which the control signal Lp is at the L level is divided into two periods in the shift period, and the references of the two periods are the start timing and the end timing in the shift period.

Furthermore, in the third embodiment, when the designated brightness is less than 50% and 0% or more, the period in which the control signal Lp is at the H level is reduced closer to the start timing and the end timing of the stay period as the designated brightness decreases. That is, the period in which the control signal Lp is at the H level is divided into two periods in the stay period, and the references of the two periods are the start timing and the end timing in the stay period.

In the third embodiment, the number of periods in which the control signal Lp is at the L level and the number of periods in which the control signal Lp is at the H level are not set to two, but one, and the reference of the one period may be the start timing or the end timing in the shift/stay period.

In the third embodiment, the number of periods in which the control signal Lp is at the L level and the number of periods in which the control signal Lp is at the H level may be three or more.

In any case, the period length (turn-off period length) in which the control signal Lp is at the L level and the period length (turn-on period length) in which the control signal Lp is at the H level in the shift period are periods corresponding to the brightness set by setting unit 250.

According to the third embodiment, similarly to the first embodiment and the second embodiment, it is possible to artificially enhance the resolution of the image visually recognized by the user four times, and it is possible to suppress the deterioration of the display quality.

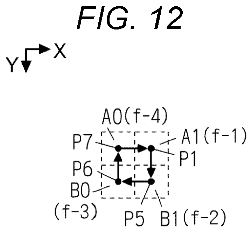

In the first, second, and third embodiments, the video pixels represented by the panel pixel a1 in the unit periods f-1 to f-4 are caused to transition as illustrated in FIG. 7, but the present disclosure is not limited to such transition. For example, the transition may be performed as in another example illustrated in FIG. 12.

In FIG. 12, the panel pixel a1 represents the video pixels A1, B1, B0, and A0 in order in the unit periods f-1 to f-4.

The video pixel B1 represented by the panel pixel a1 in the unit period f-2 is located at a point separated from the video pixel A1 by one video pixel in the Y direction. The video pixel B0 represented by the panel pixel a1 in the unit period f-3 is located at a point separated from the video pixel B1 by one video pixel in the opposite direction to the X direction. The video pixel A0 represented by the panel pixel a1 in the unit period f-4 is located at a point separated from the video pixel B0 by one video pixel in the opposite direction to the Y direction. The video pixel A1 represented by the panel pixel a1 in the unit period f-1 is located at a point separated from the video pixel A0 by one video pixel in the X direction.

In the unit periods f-1 to f-4, the panel pixel a2 represents the video pixels A3, B3, B2, and A2 in order, the panel pixel b1 represents the video pixels C1, D1, D0, and C0 in order, and the panel pixel b2 represents the video pixels C3, D3, D2, and C2 in order.

Positions P5 to P7 indicate the centers of the video pixels B1, B0, and A0 represented by the panel pixel a1 in the order of the unit periods f-2 to f-4.

As shown in FIG. 12, when the video pixel represented by the panel pixel is caused to transition, the positions P2, P3, and P4 in any one of FIGS. 8 to 11 are sequentially read as the positions P5, P6, and P7.

In this case, the shift amount for each unit period in the optical path shifting element 230 is smaller than that in the configuration in which the video pixel represented by the panel pixel is shifted as illustrated in FIG. 7. Accordingly, the shift speed of the projection position can be reduced in the optical path shifting element 230.

In the first, second, and third embodiments (hereinafter referred to as embodiments and the like), various modifications or applications can be made as follows.

In the embodiments and the like, the single frame period is divided into the four unit periods. That is, although "4" has been described as an example of k, which is the number of unit periods contained in the single frame period, k is not limited to "4". Specifically, when the shift amount of the projection pixel from a certain unit period to the next unit period is 1.0 pixel or more in terms of the panel pixel, k may be "2" or "3", or may be an integer of "5" or more.

In the embodiments and the like, each of the stay period and the shift period of the projection position is 50% (half) of the unit period length, but does not need to be half. For example, in the unit period length, the stay period of the projection position may be 60%, and the shift period may be 40%.

In the embodiments and the like, the lamp unit 2102 emits white light, and the two dichroic mirrors 2108 separate the white light into red (R), green (G), and blue (B) color lights. Not limited to the configuration, but three lamp units that individually emit a red light, a green light, and a blue light may be prepared, and the emitted red light, green light, and blue light may be sequentially incident on the liquid crystal panels 100R, 100G, and 100B.

For example, the following configurations are figured out from the configurations exemplified above.

A projection display apparatus according to a configuration 1 includes a light source that emits light, a liquid crystal panel having a panel pixel to be an optical state according to a data signal, the light emitted from the light source being incident on the panel pixel, the panel pixel emitting light according to the optical state, an optical path shifting element that shifts an optical path of the light emitted from the panel pixel and shifts a position of a projection pixel on which the emitted light from the panel pixel is projected, and a control circuit that controls the light source, the liquid crystal panel, and the optical path shifting element, wherein a single frame period includes k unit periods of a first unit period to a k-th unit period, k being an integer of 2 or more, the control circuit supplies the data signal based on a gradation level designated by pixel data of a video pixel constituting video data for each of the unit periods, the control circuit controls the optical path shifting element to shift the projection pixel for each of the unit periods, and the control circuit controls the light source to turn off or dim the light in a shift period in which the projection pixel is shifted and controls an emission state thereof based on a value of brightness.

According to the projection display apparatus of the configuration 1, it is possible to artificially enhance the resolution of the image visually recognized by the user, and to suppress the deterioration of the display quality.

The lamp unit 2102 is an example of the "light source", and the display control circuit 20 is an example of the "control circuit".

A projection display apparatus according to a specific configuration 2 of the configuration 1 further includes a setting unit that sets brightness per unit period of the light emitted from the light source, wherein the control circuit controls the emission state of the light source based on the brightness set by the setting unit. According to the projection display apparatus of the configuration 2, the emission state of the light source is controlled based on the brightness set by the setting unit.

In a projection display apparatus according to another specific configuration 3 of the configuration 2, the control circuit controls a length of a turn-off period in which the light source is turned off in the shift period according to the brightness when the brightness set by the setting unit is less than a maximum value and a first value or more.

In the projection display apparatus according to the configuration 3, the brightness is controlled by the length of the light-off period of the light source.

In a projection display apparatus according to a specific configuration 4 of the configuration 3, a plurality of the turn-off periods are provided.

The number of turn-off periods in the shift period may be set according to the brightness set by the setting unit. The total length of the turn-off periods in the shift period is a period length according to the brightness set by the setting unit.

In a projection display apparatus according to another specific configuration 5 of the configuration 2, the control circuit controls an extent of dimming of the light source in the shift period according to the brightness when the brightness set by the setting unit is less than a maximum value and a first value or more. According to the projection display apparatus of the configuration 5, the extent of dimming of the light source is controlled based on the brightness set by the setting unit.

In a projection display apparatus according to a specific configuration 6 of the configuration 3 or 5, the control circuit controls an extent of dimming of the light source or a length of a turn-off period in which the light source is turned off in a stay period in which the projection pixel is caused to stay according to the brightness when the brightness set by the setting unit is less than a first value and a minimum value or more.

In the projection display apparatus according to the configuration 6, the brightness is controlled by the extent of dimming of the light source or the length of the turn-off period in the stay period.

In a projection display apparatus according to another specific configuration 7 of the configuration 1, the panel pixels are arranged along a first direction and a second direction, the control circuit shifts the position of the projection pixel in a third direction or a fourth direction different from the first direction and the second direction for each of the unit periods, and a shift amount of the projection pixel is larger than one pixel of the panel pixel and is the same amount for each of the unit periods.

According to the projection display apparatus of the configuration 7, since the shift amount of the projection pixel is larger than that when the shift amount is 0.5 panel pixel, it is possible to suppress deterioration in display quality.

The X direction is an example of the "first direction", the Y direction is an example of the "second direction", the U direction is an example of the "third direction", and the V direction is an example of the "fourth direction".

## Claims

1. A projection display apparatus comprising:
a light source that emits light;
a liquid crystal panel having a panel pixel to be an optical state according to a data signal, the light emitted from the light source being incident on the panel pixel, the panel pixel emitting light according to the optical state;
an optical path shifting element that shifts an optical path of the light emitted from the panel pixel and shifts a position of a projection pixel on which the emitted light from the panel pixel is projected; and
a control circuit that controls the light source, the liquid crystal panel, and the optical path shifting element, wherein
a single frame period includes k unit periods of a first unit period to a k-th unit period, k being an integer of 2 or more,
the control circuit supplies the data signal based on a gradation level designated by pixel data of a video pixel constituting video data for each of the unit periods,
the control circuit controls the optical path shifting element to shift the projection pixel for each of the unit periods, and
the control circuit controls the light source to turn off or dim the light in a shift period in which the projection pixel is shifted and controls an emission state thereof based on a value of brightness.

2. The projection display apparatus according to claim 1, further comprising a setting unit that sets brightness per unit period of the light emitted from the light source, wherein
the control circuit controls the emission state of the light source based on the brightness set by the setting unit.

3. The projection display apparatus according to claim 2, wherein
the control circuit controls a length of a turn-off period in which the light source is turned off in the shift period according to the brightness when the brightness set by the setting unit is less than a maximum value and a first value or more.

4. The projection display apparatus according to claim 3, wherein
a plurality of the turn-off periods are provided.

5. The projection display apparatus according to claim 2, wherein
the control circuit controls an extent of dimming of the light source in the shift period according to the brightness when the brightness set by the setting unit is less than a maximum value and a first value or more.

6. The projection display apparatus according to claim 3, wherein
the control circuit controls an extent of dimming of the light source or a length of a turn-off period in which the light source is turned off in a stay period in which the projection pixel is caused to stay according to the brightness when the brightness set by the setting unit is less than a first value and a minimum value or more.

7. The projection display apparatus according to claim 1, wherein
the panel pixels are arranged along a first direction and a second direction,
the control circuit shifts the position of the projection pixel in a third direction or a fourth direction different from the first direction and the second direction for each of the unit periods, and
a shift amount of the projection pixel is larger than one pixel of the panel pixel and is the same amount for each of the unit periods.
